# FASCICULE DE BREVET EUROPEEN

(11) **EP 1 073 869 B1**
(45) Date de publication et mention de la délivrance du brevet: **16.10.2002**
(21) Numéro de dépôt: 99913393.7
(22) Date de dépôt: 13.04.1999
(51) Int. Cl.: F24J 2/26, F24J 2/51

(54) **PANNEAU SOLAIRE ET DISPOSITIF DE COLLECTE D'ENERGIE SOLAIRE**
SONNENKOLLEKTOR UND VORRICHTUNG ZUR AUFNAHME VON SONNENENERGIE
SOLAR CELL PANEL AND SOLAR ENERGY COLLECTING DEVICE

(30) Priorité: 22.04.1998 FR 9805038
(43) Date de publication de la demande: 07.02.2001
(73) Titulaire: TOUTENKAMION, Ladon, 45270 Bellegarde (FR)
(72) Inventeur: GIRERD, Stéphane, F-45260 Lorris (FR)
(74) Mandataire: Pontet, Bernard
(86) Numéro de dépôt international: FR9900853
(87) Numéro de publication internationale: WO99054671

(56) Documents cités:
- DE-A- 3 110 826
- FR-A- 2 384 215
- FR-A- 2 428 224
- GB-A- 1 467 039
- US-A- 4 072 262
- US-A- 4 261 332
- US-A- 4 644 935
- US-A- 4 911 353

## Description

La présente invention concerne un panneau solaire.

La présente invention concerne également un dispositif de collecte d'énergie solaire sous forme thermique.

La présente invention concerne encore un procédé de réalisation du panneau solaire structurel.

On connaît les panneaux solaires intégrant des cellules photovoltaïques. Ils sont coûteux, nécessitent des installations de fabrication élaborées et ont un rendement énergétique modeste.

On connaît également des panneaux conçus pour produire un effet de serre en transformant le rayonnement solaire reçu sur une face extérieure du panneau en rayonnement thermique émis par la face opposée.

Le GB-A-1 467 039 décrit un panneau ayant sur une face un réseau tubulaire pour un fluide caloporteur, et une feuille d'aluminium en liaison thermique avec le réseau tubulaire en cuivre. L'ensemble est maintenu contre une couche thermiquement isolante par des profilés vissés. L'énergie solaire est collectée sous forme d'une élévation de température du fluide caloporteur.

Selon le FR-A-2 384 215 les profilés vissés sont remplacés par une plaque frontale et le réseau tubulaire est partie intégrante de la feuille thermiquement conductrice.

De tels panneaux sont coûteux à réaliser et nécessitent une structure porteuse. La feuille ou autre couche thermiquement conductrice n'est pas compatible avec la réalisation de panneaux composites structurels tels que les panneaux sandwich où un noyau central typiquement en mousse est pris en sandwich entre deux plaques de résine synthétique de préférence thermodurcissable armées d'une nappe de fibres, de verre ou synthétiques, tissées ou non-tissées.

Un but de la présente invention est de proposer un panneau de collecte de l'énergie solaire qui soit particulièrement économique à fabriquer et efficace sur le plan énergétique et mécanique, et permette une installation facile.

Un autre but de la présente invention est de proposer un dispositif de collecte de l'énergie solaire qui soit économique et efficace.

Suivant un premier aspect de l'invention, le panneau solaire comprenant :
- une plaque frontale située du côté exposé au soleil ;
- une couche thermiquement isolante adjacente à un côté arrière de la plaque frontale, opposé à l'exposition au soleil;
- un faisceau tubulaire pour la circulation d'un fluide caloporteur, ce faisceau étant interposé entre la plaque frontale et la couche isolante; et
- une nappe thermiquement conductrice interposée entre la plaque frontale et la couche thermiquement isolante et qui est en liaison thermique avec la plaque frontale et avec le faisceau tubulaire;
est caractérisé en ce que la nappe thermiquement conductrice est perméable à un agent de solidarisation de la plaque frontale avec la couche thermiquement isolante et fait partie intégrante d'une interface de stratification de la plaque frontale avec la couche thermiquement isolante.

On réalise ainsi un panneau structurel où la nappe thermiquement conductrice vient même renforcer l'interface de stratification. Le coût de fabrication n'est pas considerablement augmenté par rapport à un panneau structurel classique et le montage est le même à part le raccordement avec un circuit de fluide. En particulier, le panneau peut être auto-portant et donc ne pas nécessiter de charpente porteuse.

Il s'est avéré qu'une nappe thermiquement conductrice particulièrement appropriée est constituée par un grillage métallique, de préférence en aluminium, ou par une nappe de fibres thermiquement conductrices, en particulier fibres de carbone.

Le panneau est de préférence du type sandwich, la couche isolante étant disposée entre ladite plaque frontale et une plaque arrière.

Il est avantageux que le réseau tubulaire soit un tube souple, par exemple en matière synthétique, que l'on dispose dans un sillon de forme sinueuse formé dans la couche isolante pour former un serpentin. Il a été trouvé que le réseau tubulaire n'avait pas besoin d'être en matière thermiquement très conductrice, dès lors que la chaleur collectée est correctement piégée et acheminée par la nappe conductrice. Il s'est avéré très avantageux à cet égard que la nappe s'étendant sensiblement le long de la plaque frontale forme des logements pour contourner localement chaque élément du faisceau en passant entre le faisceau et la couche isolante. Ainsi, chaque élément du réseau tubulaire reçoit de la chaleur d'une part directement de la plaque frontale sur la face avant du ou des tubes, et d'autre part par l'intermédiaire de la nappe sur le reste du pourtour du ou des tubes.

Suivant un second aspect de l'invention, le dispositif de collecte d'énergie solaire sous forme thermique peut comprendre:
- un réservoir de fluide caloporteur;
- une pompe ayant une admission plongée dans le fluide caloporteur du réservoir; et
- un panneau incorporant un faisceau tubulaire pour le fluide caloporteur, le panneau étant disposé selon un angle par rapport à l'horizontale de façon que le faisceau tubulaire ait une extrémité supérieure raccordée au refoulement de la pompe, et une extrémité inférieure débouchant librement au-dessus du niveau de fluide dans le réservoir.

Un tel dispositif se vidange aisément lorsqu'il est à l'arrêt, par inversion de l'écoulement. L'écoulement inverse s'effectue alors de l'extrémité inférieure vers l'extrémité supérieure et de là dans le réservoir à travers la pompe. Une telle vidange peut s'effectuer par inversion du sens de fonctionnement de la pompe. La vidange est même automatique et spontanée dès que la pompe s'arrête à condition que la pompe soit d'un type où l'admission et le refoulement communiquent l'un avec l'autre au moins lorsque la pompe est à l'arrêt. Il s'agit typiquement d'une pompe de type centrifuge ou autre pompe du type à rotor-turbine.

Ainsi le dispositif selon l'invention est particulièrement approprié pour l'utilisation avec le panneau solaire disposé en toiture. En outre, le fluide caloporteur peut être constitué par de l'eau sans qu'il en résulte un risque de dégradation par le gel ou le calcaire.

De préférence :
- le dispositif de collecte d'énergie solaire comprend des moyens thermostatiques pour couper le fonctionnement de la pompe lorsqu'une température d'utilisation relevée, telle que par exemple la température du fluide caloporteur dans le réservoir, dépasse un seuil haut, et/ou pour couper le fonctionnement de la pompe lorsque la température de la plaque frontale est inférieure à un seuil bas.
- des moyens sont prévus pour faire varier le seuil bas en fonction d'une température d'utilisation relevée, telle que par exemple la température du fluide caloporteur en-dehors du réseau tubulaire et en particulier dans le réservoir.
- le réservoir est une piscine.

Selon un troisième aspect de l'invention, le procédé pour réaliser un panneau selon le premier aspect comprend : former dans une face d'un bloc de mousse plat au moins un sillon, placer la nappe conductrice sur ladite face du bloc, placer un réseau tubulaire dans le sillon alors que la nappe forme des logements épousant la forme du sillon, puis fixer sur ladite face une plaque frontale au moyen d'une interface de structuration.

D'autres particularités et avantages de l'invention ressortiront encore de la description ci-après, relative à un exemple non limitatif.

Aux dessins annexés:
- la figure 1 est une vue en coupe et perspective d'un panneau selon l'invention;
- la figure 2 est une vue en coupe transversale illustrant un stade du procédé de fabrication d'un panneau solaire selon l'invention;
- la figure 3 est une vue d'un détail du panneau, en coupe; et
- la figure 4 est une vue d'un dispositif de collecte selon l'invention.

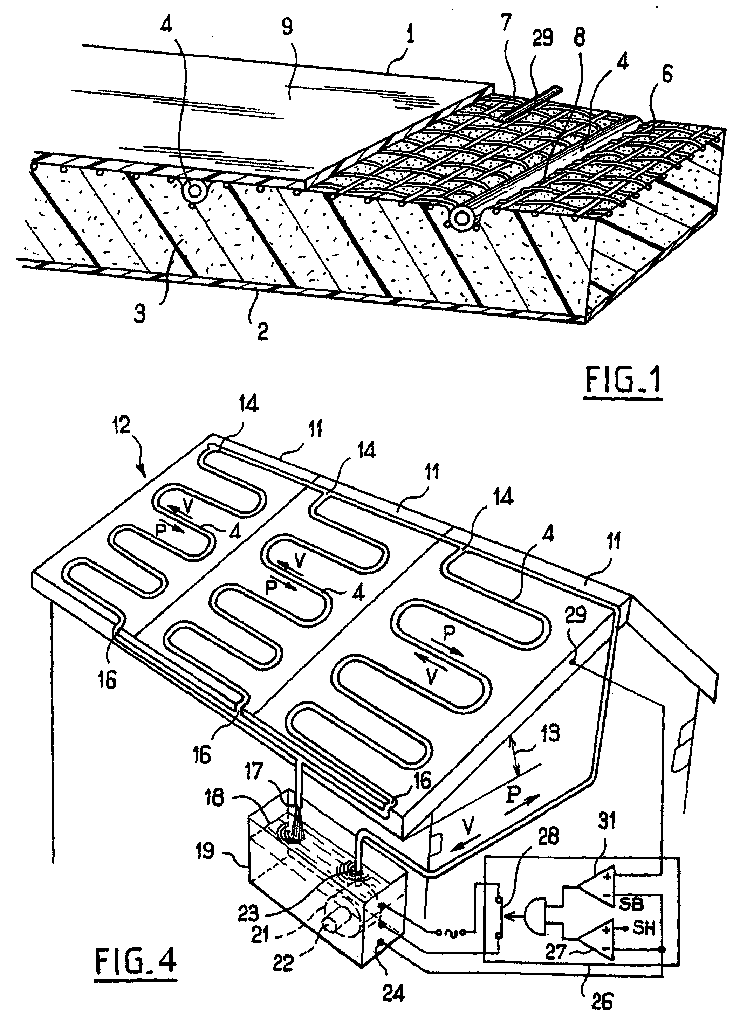

Dans l'exemple représenté à la figure 1, le panneau solaire est réalisé sous la forme d'un panneau sandwich comprenant une plaque frontale 1 destinée à être exposée au rayonnement du soleil et une plaque arrière 2, toutes les deux en polyester armé de fibres de verre. Entre la plaque frontale 1 et la plaque arrière 2 est interposée une couche thermiquement isolante 3, réalisée par exemple en mousse de polyuréthane.

Suivant l'invention, on a interposé un réseau tubulaire 4 entre la plaque frontale 1 et la couche isolante 3.

Plus particulièrement, le réseau tubulaire 4 est logé dans des évidements correspondants en forme de canal 6 ménagés dans la couche 3 sur sa face qui est adjacente à la plaque frontale 1.

Suivant une particularité très avantageuse, on a également placé entre la plaque frontale 1 et la couche isolante 3 une nappe 7 thermiquement conductrice, réalisée sous la forme d'un fin grillage d'aluminium. Un tel grillage est très flexible avant son insertion dans le panneau.

La nappe 7 est en liaison thermique avec la plaque frontale 1 et avec le faisceau tubulaire 4.

La nappe est en contact ou quasi-contact avec la face arrière de la plaque frontale dans des zones situées entre le faisceau tubulaire 4, et forme des logements 8 qui suivent le contour des évidements 6 pour contourner localement chaque tube du faisceau 4 en passant entre le faisceau 4 et la couche isolante 3.

Autrement dit, le faisceau 4 est disposé entre la nappe 7 et la plaque frontale 1. Le faisceau est chauffé du côté frontal par la plaque 1 et sur tous ses autres côtés par la nappe 7.

Pour la réalisation du panneau représenté à la figure 1, on peut commencer par coller le faisceau tubulaire 4 contre la plaque frontale 1, puis préfixer la nappe 7 contre la même face de la plaque frontale 1 en lui faisant former des bosses partout où des éléments du faisceau tubulaire 4 sont présents.

Ensuite, on place les plaques 1 et 2 dans leur position relative voulue et on provoque la formation, entre elles, de la mousse polyuréthane destinée à constituer la couche isolante 3, de manière que cette couche vienne emprisonner la nappe 7 et le faisceau tubulaire 4 contre la plaque frontale 1, et fixer l'une à l'autre les deux plaques 1 et 2.

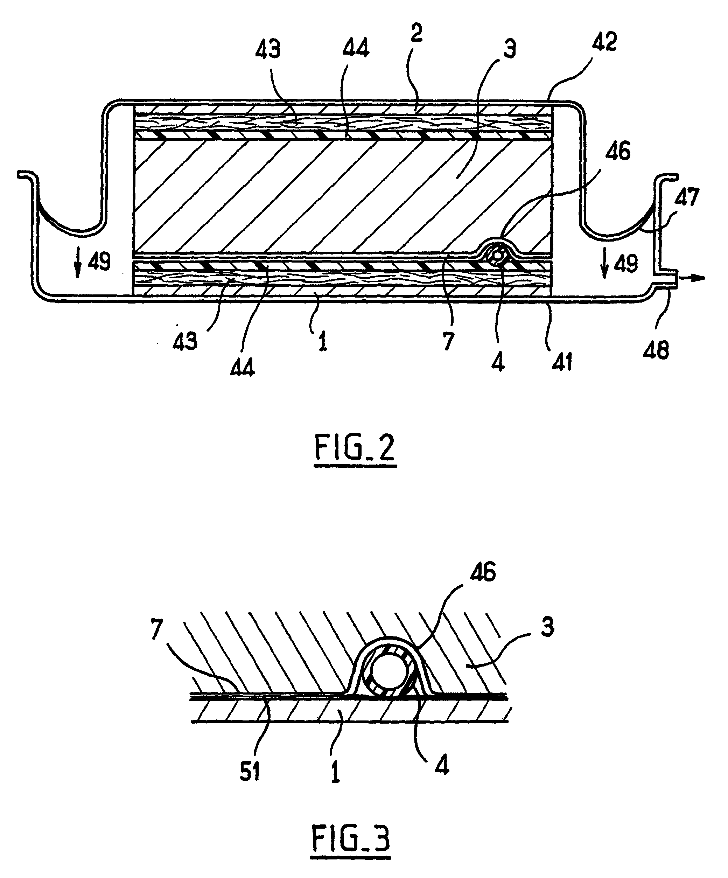

Selon un autre procédé de réalisation, qui est préféré, on fabrique un bloc de mousse destiné à constituer la couche 3, on usine dans une face du bloc au moins une rainure ou sillon destinée à constituer le ou les logement(s) 6 pour le réseau 4, on fixe la nappe 7 contre cette face du bloc 3, on place le réseau 4, puis on colle la plaque frontale 1. La plaque arrière 2 peut être fixée à un moment quelconque après la fabrication du bloc de mousse. La figure 2 illustre plus en détail ce second mode de fabrication du panneau. On place entre un moule 41 et un contre-moule 42 un empilement comprenant, entre la couche isolante 3 et chaque plaque frontale 1, 2, une composition stratifiante comprenant une couche de fibres de verre ou de carbone 43 sous la forme d'une nappe tissée ou non-tissée imprégnée d'une couche de résine thermodurcissable 44. Les plaques 1 et 2 peuvent n'être qu'un revêtement imperméabilisant dit "gel-coat". Du côté de la plaque frontale 1, la couche 3 a été préalablement munie de la nappe thermiquement conductrice 7 puis du réseau tubulaire 4 dans un sillon préalablement formé 46. La nappe 7 est donc interposée entre la paroi du sillon 46 et le tube 4.

Le contre-moule 42 présente une lèvre d'étanchéité périphérique 47 appuyée contre une paroi latérale intérieure du moule 41. Par un orifice d'aspiration 48 du moule 41 on met en dépression l'espace compris entre le moule 41 et le contre-moule 42, de sorte que le contre-moule 42 s'enfonce dans le moule 41 selon les flèches 49, comprimant ainsi l'empilement, en particulier les couches de fibres 43 et de résine 44. Ces couches se mélangent et s'aplatissent pour former une interface de stratification 51 (figure 3) entre la couche 3 et chacune des plaques 1 et 2. On obtient ainsi un panneau structurel ou autoportant, c'est à dire pouvant servir d'élément structurel dans une construction, par exemple une toiture, sans avoir besoin de charpente porteuse. Du côté de la plaque frontale 1 la nappe conductrice 7 est intégrée à l'interface structurante 51, fait corps avec le voile de résine et de fibres et a permis par sa structure ajourée à la résine de venir imprégner la mousse de la couche 3. Ainsi la résine solidarise directement la plaque 1 avec la couche 3.

La plaque frontale 1 est de préférence revêtue sur sa face frontale 9 d'une peinture ou autre revêtement absorbant le rayonnement solaire et le transformant en chaleur avec une tendance aussi réduite que possible à produire un rayonnement réémis.

La plaque frontale 1 est de préférence réalisée en un matériau ayant de bonnes qualités d'isolation thermique pour éviter que la chaleur s'évacue par d'éventuelles structures porteuses du panneau, tels que cadres métalliques ou autres. Le polyester armé de fibres de verre convient pour constituer la plaque frontale 1 en lui donnant à la fois les qualités d'isolation thermique qui viennent d'être exposées et la résistance mécanique souhaitable.

Un exemple de dimensionnement est le suivant:
- épaisseur des plaques 1 et 2: environ 1 à 2mm;
- épaisseur de la couche isolante 3: environ 60mm;
- faisceau tubulaire en caoutchouc naturel et/ou synthétique, diamètre extérieur : 6mm, diamètre intérieur : 4mm;
- espacement entre les éléments parallèles du faisceau tubulaire: environ 50mm.

Dans l'exemple représenté à la figure 4, trois panneaux modulaires 11 tels que celui illustré à la figure 1 sont montés côte à côte pour former un pan de toiture 12. Les panneaux 11 forment un angle 13 par rapport à l'horizontale, par exemple 30 à 45°. Chaque faisceau 4 comporte ainsi une extrémité supérieure 14 et une extrémité inférieure 16 entre lesquelles le faisceau 4 comprend pour chaque panneau un seul tube conformé en serpentin formé de segments horizontaux reliés entre eux par des virages à 180°, de préférence sensiblement semi-circulaires. Les extrémités inférieures 16 sont raccordées à une sortie 17 au-dessus du niveau 18 d'un réservoir de fluide caloporteur 19. Une pompe 21 est immergée dans le réservoir 19, de même que son orifice d'admission 22. Le refoulement 23 de la pompe est raccordé aux extrémités supérieures 14 des faisceaux tubulaires 4.

Lorsque le dispositif est en fonctionnement, la pompe 21 prélève du fluide caloporteur dans le réservoir 19 et le fait circuler dans le sens indiqué par les flèches P vers les extrémités supérieures 14 puis à travers les faisceaux 4 jusqu'aux extrémités inférieures 16 et de là par la sortie 17 dans le réservoir 19. De manière non représentée, le réservoir 19 peut servir de source chaude par exemple pour une installation de chauffage central.

Le réservoir 19 peut être de très grande taille et être constitué notamment par une piscine dont l'eau, qui est à réchauffer, sert de fluide caloporteur au sens de l'invention.

La toiture 12 peut alors être une toiture d'abri à côté de la piscine, où même, de manière particulièrement préférée, une toiture selon le WO-A-97 20 114, mobile entre une position de couverture hermétique de la piscine et une position d'abri à côté de celle-ci.

En position d'abri, la toiture rafraîchie par le prélèvement thermique est plus efficace pour protéger de la chaleur les personnes se trouvant dessous.

La pompe 21 est typiquement de type centrifuge ou autre type à rotor-turbine et plus généralement d'un type dans lequel l'admission 22 et le refoulement 23 sont en communication l'un avec l'autre, au moins lorsque la pompe est à l'arrêt. Ainsi, dès qu'on arrête la pompe 21, tout le système se vidange par effet de siphon dans le sens (flèches V) inverse du sens de pompage, c'est à dire de la sortie 17 jusqu'aux extrémités inférieures 16 puis à travers les faisceaux 4 jusqu'aux extrémités supérieures 14 et de là à travers le refoulement 23, la pompe 21 et l'orifice d'admission 22. Ainsi le risque de gel lorsque le dispositif est à l'arrêt est évité et le fluide caloporteur peut tout simplement être constitué par de l'eau.

Des moyens thermostatiques sont prévus pour réguler la température de l'eau du réservoir 19.

Une sonde thermostatique 24 est placée en contact thermique avec le fluide caloporteur dans le réservoir 19. Un appareil de commande 26 reçoit le signal de la sonde 24, et le compare avec un seuil haut SH prédéterminé dans un comparateur 27, et coupe le fonctionnement de la pompe 21 lorsque la température relevée par la sonde 24 est supérieure au seuil SH, au moyen d'un interrupteur 28. On évite ainsi de chauffer excessivement le fluide, notamment s'il s'agit d'une piscine dont l'eau ne doit pas, en général, dépasser une température modérée de 30 à 35°C.

Une sonde thermostatique 29 est placée en contact thermique avec la plaque frontale 1, et de préférence avec la nappe thermiquement conductrice 7.

L'appareil de commande 26 reçoit le signal de la sonde 29, le compare avec un seuil bas SB dans un comparateur 31, et coupe le fonctionnement de la pompe 21 au moyen de l'interrupteur 28 lorsque la température relevée par la sonde est inférieure au seuil bas prédéterminé, supérieur à la température de congélation du fluide caloporteur.

On évite ainsi de refroidir le fluide caloporteur au lieu de le réchauffer, et on évite la congélation du fluide caloporteur.

Dans la variante représentée, le seuil bas SB, au lieu d'être fixe, est égal à la température du fluide caloporteur relevée par la sonde 24, dont le signal est envoyé à la borne négative du comparateur 31.

Ainsi, le dispositif ne fonctionne que lorsqu'il est effectivement capable de réchauffer l'eau du réservoir 19.

Bien entendu, l'invention n'est pas limitée aux exemples décrits et représentés.

Le réalisation sous forme de panneaux autonomes tels qu'illustrés à la figure 1 n'est pas indispensable: on pourrait par exemple fixer la face arrière de la couche thermiquement isolante 3 contre une structure porteuse telle qu'un mur, une dalle de toiture.

Il est préféré mais non indispensable, que le faisceau tubulaire 4 soit constitué d'un seul tube disposé en serpentin comme représenté à la figure 4. Il a en effet été constaté que le débit ainsi obtenu est suffisant pour collecter l'énergie solaire et on évite les coûts et risques de fuite résultant des multiples soudures ou raccords qui résultent des faisceaux à tubes multiples montés en parallèle. Pour de meilleurs transferts thermiques mais avec un coût plus élevé, le faisceau pourrait être réalisé en métal tel que le cuivre.

Dans la réalisation de la figure 4, l'utilisation de panneaux modulaires est avantageuse pour permettre la préfabrication et un transport aisé sur le site d'installation, mais elle n'est pas indispensable.

Il n'est pas indispensable que le réservoir de collecte du fluide caloporteur en-dessous de la sortie 17 soit le même que celui dans lequel baigne l'orifice d'admission 22 de la pompe. Il peut y avoir deux réservoirs séparés, entre lesquels s'étend par exemple un réseau d'utilisation du fluide chaud. L'effet de vidange spontané à l'arrêt de la pompe est obtenu du seul fait que l'orifice de sortie 17 est situé à un niveau supérieur au niveau de la réserve dans laquelle baigne l'orifice d'admission 22.

On peut selon les applications utiliser le dispositif sans régulation, ou n'utiliser que la régulation par rapport à un seuil bas ou que la régulation par rapport à un seuil haut.

La sonde 24 pourrait, selon les applications, être placée ailleurs, par exemple à la sortie 17 du réseau ou au contact d'une structure d'utilisation distincte du réservoir 19.

La nappe thermiquement conductrice 7 peut être autre chose qu'un grillage. Il peut s'agir par exemple d'une nappe de fibres conductrices de la chaleur, tissées ou non-tissées, en particulier de fibres de carbone.

## Revendications

1. Panneau solaire, comprenant :
- une plaque frontale (1) située du côté exposé au soleil ;
- une couche thermiquement isolante (3) adjacente à un côté arrière de la plaque frontale, opposé à l'exposition au soleil;
- un faisceau tubulaire (4) pour la circulation d'un fluide caloporteur, ce faisceau étant interposé entre la plaque frontale (9) et la couche isolante (3); et
- une nappe thermiquement conductrice (7) interposée entre la plaque frontale (1) et la couche thermiquement isolante (3) et qui est en liaison thermique avec la plaque frontale (1) et avec le faisceau tubulaire (4);
**caractérisé en ce que** la nappe thermiquement conductrice (7) est perméable à un agent de solidarisation (44) de la plaque frontale (1) avec la couche thermiquement isolante (3) et fait partie intégrante d'une interface de stratification (51) de la plaque frontale (1) avec la couche thermiquement isolante (3).

2. Panneau selon la revendication 1, **caractérisé en ce que** l'interface de stratification (51) comprend une nappe de fibres (43), tissée ou non-tissée.

3. Panneau selon la revendication 1 ou 2, **caractérisé en ce que** l'agent de solidarisation (44) est une résine thermodurcissable.

4. Panneau selon l'une des revendications 1 à 3, **caractérisé en ce que** la nappe (7) s'étend sensiblement le long de la face arrière de la plaque frontale (1) dans des zones situées entre le faisceau (4), et forme des logements (8) pour contourner localement chaque élément du faisceau (4) en passant entre le faisceau (4) et la couche isolante (3).

5. Panneau selon la revendication 4, **caractérisé en ce que** là où la nappe (7) forme lesdits logements, le reste de l'interface de stratification (51) passe entre la plaque frontale (1) et le faisceau tubulaire (4).

6. Panneau selon l'une des revendications 1 à 5, **caractérisé en ce que** la nappe (7) est un grillage métallique, de préférence en aluminium.

7. Panneau selon l'une des revendications 1 à 5, **caractérisé en ce que** la nappe (7) est une nappe de fibres à bonne conductibilité thermique, de préférence de fibres de carbone.

8. Panneau selon l'une des revendications 1 à 7, **caractérisé en ce que** la plaque frontale (1) est en matière synthétique.

9. Panneau selon l'une des revendications 1 à 8, **caractérisé en ce que** la couche isolante (3) est une mousse synthétique.

10. Panneau selon l'une des revendications 1 à 9, **caractérisé en ce que** le panneau (11) est du type sandwich, la couche isolante (3) étant disposée entre ladite plaque frontale (1) et une plaque arrière (2) fixée à la couche isolante par une seconde interface de stratification.

11. Panneau selon l'une des revendications 1 à 10, **caractérisé en ce que** le faisceau tubulaire (4) comprend au moins un tube disposé en serpentin.

12. Panneau selon la revendication 11, **caractérisé en ce que** le tube est un tube unique comprenant des parties rectilignes reliées entres-elles par des virages à 180°.

13. Panneau selon l'une des revendications 1 à 12, **caractérisé en ce que** le faisceau tubulaire (4) est fait de tube souple, de préférence en matière synthétique.

14. Dispositif de collecte d'énergie solaire sous forme thermique, comprenant:
- un réservoir de fluide caloporteur (19);
- une pompe (21) ayant une admission (22) plongée dans le fluide caloporteur du réservoir (19); et
- un panneau (11) incorporant un faisceau tubulaire (4) pour le fluide caloporteur, le panneau étant disposé selon un angle (13) par rapport à l'horizontale de façon que le faisceau tubulaire (4) ait une extrémité supérieure (14) et une extrémité inférieure (16) dont l'une est raccordée au refoulement (23) de la pompe (21) et l'autre débouche dans le réservoir (19),
**caractérisé en ce que** le panneau (11) est conforme à l'une des revendications 1 à 13, et **en ce que** ladite autre extrémité (16) du faisceau débouche librement au-dessus du niveau (18) de fluide dans le réservoir (19), de façon à permettre hors fonctionnement la vidange du fluide caloporteur depuis ladite autre extrémité jusqu'au réservoir à travers la pompe par une circulation inversée du fluide caloporteur.

15. Dispositif de collecte d'énergie solaire selon la revendication 14, **caractérisé en ce que** le panneau (11) est un panneau de toiture (12).

16. Dispositif de collecte d'énergie solaire selon la revendication 14 ou 15, **caractérisé en ce que** le fluide caloporteur est de l'eau.

17. Dispositif de collecte d'énergie solaire selon l'une des revendications 14 à 16, **caractérisé en ce qu'**il comprend des moyens thermostatiques (24, 27, 28) pour couper le fonctionnement de la pompe lorsqu'une température d'utilisation relevée dépasse un seuil haut (SH).

18. Dispositif de collecte d'énergie solaire selon l'une des revendications 14 à 17, **caractérisé en ce qu'**il comprend des moyens thermostatiques (28, 29, 31) pour couper le fonctionnement de la pompe lorsque la température d'une partie frontale (1) du panneau est inférieure à un seuil bas (SB).

19. Dispositif de collecte d'énergie solaire selon la revendication 18, **caractérisé en ce qu'**il comprend des moyens pour faire varier le seuil bas (SB) en fonction d'une température d'utilisation relevée.

20. Dispositif de collecte d'énergie solaire selon l'une des revendications 14 à 19, **caractérisé en ce que** le réservoir (19) est une piscine.

21. Dispositif de collecte selon l'une des revendications 14 à 20, **caractérisé en ce que** ladite autre extrémité de faisceau est l'extrémité inférieure (16).

22. Procédé pour réaliser un panneau selon l'une des revendications 1 à 13, **caractérisé en ce qu'**on forme dans une face d'un bloc de mousse plat au moins un sillon (6), on place la nappe thermiquement conductrice (7) sur ladite face du bloc, on place un réseau tubulaire (4) dans le sillon (6) alors que la nappe (7) forme des logements épousant la forme du sillon (6), puis on fixe sur ladite face une plaque frontale (1) au moyen d'une interface de stratification.

23. Procédé selon la revendication 22, **caractérisé en ce qu'**on forme le sillon (6) avec une forme sinueuse et on utilise pour le réseau tubulaire (4) un tube souple que l'on forme par son positionnement dans le sillon (6).

24. Procédé selon la revendication 22 ou 23, **caractérisé en ce qu'**on part d'une nappe thermiquement conductrice (7) initialement plane ayant une flexibilité suffisante pour former lesdits logements par la présence de la plaque frontale (1) maintenant le réseau tubulaire (4) dans le sillon (6).

## Claims

1. Solar panel, comprising:
- a front plate (1) situated on the side exposed to the sun;
- a thermally insulating layer (3) adjacent to a rear side of the front plate, facing away from exposure to the sun;
- a tube bundle (4) for the circulation of a heat-transfer fluid, this bundle being interposed between the front plate (9) and the insulating layer (3); and
- a thermally conductive sheet (7) interposed between the front plate (1) and the thermally insulating layer (3) and which is thermally linked to the front plate (1) and to the tube bundle (4);
**characterized in that** the thermally conductive sheet (7) is permeable to an agent (44) binding the frontal plate (1) with the thermally insulating layer (3) and forms an integral part of an interface (51) stratifying the front plate (1) with the thermally insulating layer (3).

2. Panel according to claim 1, **characterized in that** the stratification interface (51) comprises a sheet of fibres (43), woven or non-woven.

3. Panel according to claim 1 or 2, **characterized in that** the binding agent (44) is a thermosetting resin.

4. Panel according to one of claims 1 to 3, **characterized in that** the sheet (7) extends substantially along the rear face of the front plate (1) in zones situated between the tube bundle (4), and forms housings (8) for locally straddling each element of the tube (4) by passing between the bundle (4) and the insulating layer (3).

5. Panel according to claim 4, **characterized in that**, where the sheet (7) forms the said housings, the remainder of the stratification interface (51) passes between the front plate (1) and the tube bundle (4).

6. Panel according to one of claims 1 to 5, **characterized in that** the sheet (7) is a metal grille, preferably made of aluminium.

7. Panel according to one of claims 1 to 5, **characterized in that** the sheet (7) is a sheet of fibres with good thermal conductivity, preferably made of carbon fibres.

8. Panel according to one of claims 1 to 7, **characterized in that** the front plate (1) is made of synthetic material.

9. Panel according to one of claims 1 to 8, **characterized in that** the insulating layer (3) is a synthetic foam.

10. Panel according to one of claims 1 to 9, **characterized in that** the panel (11) is of the sandwich type, the insulating layer (3) being arranged between the said front plate (1) and a rear plate (2) fixed to the insulating layer by a second stratification interface.

11. Panel according to one of claims 1 to 10, **characterized in that** the tube bundle (4) comprises at least a tube arranged in a serpentine coil.

12. Panel according to claim 11, **characterized in that** the tube is a single tube comprising rectilinear parts connected to each other by 180° bends.

13. Panel according to one of claims 1 to 12, **characterized in that** the tube bundle (4) is made of flexible tube, preferably of synthetic material.

14. Device for collecting solar energy in thermal form, comprising:
- a tank of heat-transfer fluid (19);
- a pump (21) having an inlet (22) immersed in the heat-transfer fluid of the tank (19); and
- a panel (11) incorporating a tube bundle (4) for the heat-transfer fluid, the panel being arranged at an angle (13) relative to the horizontal such that the tube bundle (4) has an upper end (14) and a lower end (16), one of which is connected to the outlet (23) of the pump (21) and the other opens into the tank (19),
**characterized in that** the panel is according to one of claims 1 to 13 and **in that** said other end (16) opens out freely above the level (18) of fluid in the tank (19) thereby to allow, out of operation, the heat-transfer fluid to be drained from said other end into the tank through the pump by way of a reverse flow of the heat-transfer fluid.

15. Device for collecting solar energy according to claim 14, **characterized in that** the panel (11) is a roof panel (12).

16. Device for collecting solar energy according to claim 14 or 15, **characterized in that** the heat-transfer fluid is water.

17. Device for collecting solar energy according to one of claims 14 to 16, **characterized in that** it comprises thermostatic means (24, 27, 28) for interrupting the operation of the pump when a recorded temperature of use exceeds an upper threshold value (SH).

18. Device for collecting solar energy according to one of claims 14 to 17, **characterized in that** it comprises thermostatic means (28, 29, 31) for interrupting the operation of the pump when the temperature of a front part (1) of the panel is below a lower threshold value (SB).

19. Device for collecting solar energy according to claim 18, **characterized in that** it comprises means of varying the lower threshold value (SB) in relation to a recorded temperature in use.

20. Device for collecting solar energy according to one of claims 1 to 19, **characterized in that** the tank (19) is a swimming-pool.

21. Collecting device according to one of claims 14 to 20, **characterized in that** said other end of the bundle is the lover end (16).

22. Method of realizing a panel according to one of claims 1 to 13, **characterized in that** at least one duct (6) is formed in one face of a flat foam block, the thermally conductive sheet (7) is placed on the said face of the block, a tubular network (4) is placed in the duct (6) while the sheet (7) forms housings copying the shape of the duct (6), then a front plate (1) is fixed on the said face by means of a stratification interface.

23. Method according to claim 22, **characterized in that** the duct (6) is formed with a sinuous shape and a flexible tube which is formed by its position in the duct (6) is used for the tubular network (4).

24. Method according to claim 22 or 23, **characterized in that** it starts from an initially flat thermally conductive sheet (7) having sufficient flexibility to form the said housings through the presence of the front plate (1) keeping the tube network (4) within the duct (6).

## Patentansprüche

1. Solarpanel, umfassend:
- eine Frontplatte (1), die auf der der Sonne ausgesetzten Seite angeordnet ist,
- eine wärmeisolierende Schicht (3), die einer der Sonnenaussetzung entgegengesetzten Rückseite der Frontplatte benachbart ist,
- ein Rohrbündel (4) für den Umlauf eines Wärmeträgerfluids, wobei dieses Bündel zwischen die Frontplatte (9) und die Isolierschicht (3) eingesetzt ist, und
- eine wärmeleitende Bahn (7), die zwischen die Frontplatte (1) und die wärmeisolierende Schicht (3) eingesetzt ist und die mit der Frontplatte (1) und mit dem Rohrbündel (4) in thermischer Verbindung ist,
**dadurch gekennzeichnet, daß** die wärmeleitende Bahn (7) für ein Mittel (44) zur festen Verbindung der Frontplatte (1) mit der wärmeisolierenden Schicht (3) durchlässig ist und einen integrierenden Teil einer Zwischenschicht (51) zur Zusammenschichtung der Frontplatte (1) mit der wärmeisolierenden Schicht (3) bildet.

2. Panel nach Anspruch 1, **dadurch gekennzeichnet, daß** die Zusammenschichtungszwischenschicht (51) eine gewebte oder nichtgewebte Faserbahn (43) umfasst.

3. Panel nach Anspruch 1 oder 2, **dadurch gekennzeichnet, daß** das Mittel (44) zur festen Verbindung ein warmaushärtendes Harz ist.

4. Panel nach einem der Ansprüche 1 bis 3, **dadurch gekennzeichnet, daß** die Bahn (7) sich im wesentlichen längs der Rückseite der Frontplatte (1) in zwischen dem Bündel (4) gelegenen Zonen erstreckt und Aussparungen (8) bildet, um jedes Element des Bündels (4) örtlich zwischen dem Bündel (4) und der Isolierschicht (3) zu umgehen.

5. Panel nach Anspruch 4, **dadurch gekennzeichnet, daß** dort, wo die Bahn (7) diese Aussparungen bildet, der Rest der Zusammenschichtungszwischenschicht (51) zwischen der Frontplatte (1) und dem Rohrbündel (4) verläuft.

6. Panel nach einem der Ansprüche 1 bis 5, **dadurch gekennzeichnet, daß** die Bahn (7) ein Metallgitter vorzugsweise aus Aluminium ist.

7. Panel nach einem der Ansprüche 1 bis 5, **dadurch gekennzeichnet, daß** die Bahn (7) eine Bahn aus Fasern mit guter Wärmeleitfähigkeit, vorzugsweise Kohlenstoffasern, ist.

8. Panel nach einem der Ansprüche 1 bis 7, **dadurch gekennzeichnet, daß** die Frontplatte (1) aus Kunststoff besteht.

9. Panel nach einem der Ansprüche 1 bis 8, **dadurch gekennzeichnet, daß** die Isolierschicht (3) ein Kunstschaumstoff ist.

10. Panel nach einem der Ansprüche 1 bis 9, **dadurch gekennzeichnet, daß** das Panel (11) einen Sandwichaufbau besitzt, wobei die Isolierschicht (3) zwischen der Frontplatte (1) und einer Rückenplatte (2) angeordnet ist, die an der Isolierschicht über eine zweite Zusammenschichtungszwischenschicht befestigt ist.

11. Panel nach einem der Ansprüche 1 bis 10, **dadurch gekennzeichnet, daß** das Rohrbündel (4) mindestens ein schlangenförmig angeordnetes Rohr umfasst.

12. Panel nach Anspruch 11, **dadurch gekennzeichnet, daß** das Rohr ein einziges Rohr ist, das geradlinige Teile aufweist, die durch 180°-Krümmungen miteinander verbunden sind.

13. Panel nach einem der Ansprüche 1 bis 12, **dadurch gekennzeichnet, daß** das Rohrbündel (4) aus einem Schlauch vorzugsweise aus Kunststoff besteht.

14. Vorrichtung zum Sammeln von Solarenergie in Form von Wärme, umfassend:
- einen Behälter (19) für Wärmeträgerfluid,
- eine Pumpe (21) mit einem in das Wärmeträgerfluid des Behälters (19) eintauchenden Zulauf und
- ein Panel (11), das ein Rohrbündel (4) für das Wärmeträgerfluid enthält und bezüglich der Waagerechten in einem Winkel (13) angeordnet ist, so daß das Rohrbündel (4) ein oberes Ende (14) und ein unteres Ende (16) besitzt, deren eines mit der Druckseite (23) der Pumpe (21) verbunden ist und deren anderes in den Behälter (19) ausmündet,
**dadurch gekennzeichnet, daß** das Panel (11) gemäß einem der Ansprüche 1 bis 13 ausgebildet ist und daß das andere Ende (16) des Bündels oberhalb des Fluidspiegels (18) im Behälter (19) frei ausmündet, so daß außerhalb des Betriebs die Entleerung des Wärmeträgerfluids in einer umgekehrten Strömung dieses Wärmeträgerfluids von diesem anderen Ende über die Pumpe zum Behälter gestattet wird.

15. Vorrichtung zum Sammeln von Solarenergie nach Anspruch 14, **dadurch gekennzeichnet, daß** das Panel (11) ein Dachpanel (12) ist.

16. Vorrichtung zum Sammeln von Solarenergie nach Anspruch 14 oder 15, **dadurch gekennzeichnet, daß** das Wärmeträgerfluid Wasser ist.

17. Vorrichtung zum Sammeln von Solarenergie nach einem der Ansprüche 14 bis 16, **dadurch gekennzeichnet, daß** sie thermostatische Mittel (24,27,28) aufweist, um den Betrieb der Pumpe zu unterbrechen, wenn eine gemessene Betriebstemperatur eine obere Schwelle (SH) überschreitet.

18. Vorrichtung zum Sammeln von Solarenergie nach einem der Ansprüche 14 bis 17, **dadurch gekennzeichnet, daß** sie thermostatische Mittel (28,29,31) aufweist, um den Betrieb der Pumpe zu unterbrechen, wenn die Temperatur eines Frontteils (1) des Panels unter einer unteren Schwelle (SB) liegt.

19. Vorrichtung zum Sammeln von Solarenergie nach Anspruch 18, **dadurch gekennzeichnet, daß** sie Mittel zum Ändern der unteren Schwelle (SB) in Abhängigkeit von einer gemessenen Betriebstemperatur umfasst.

20. Vorrichtung zum Sammeln von Solarenergie nach einem der Ansprüche 14 bis 19, **dadurch gekennzeichnet, daß** der Behälter (19) ein Schwimmbad ist.

21. Vorrichtung zum Sammeln nach einem der Ansprüche 14 bis 20, **dadurch gekennzeichnet, daß** das andere Ende des Bündels das untere Ende (16) ist.

22. Verfahren zur Herstellung eines Panels nach einem der Ansprüche 1 bis 13, **dadurch gekennzeichnet, daß** man in einer Seite eines flachen Schaumstoffblocks mindestens eine Nut (6) bildet, die wärmeleitende Bahn (7) auf diese Seite des Blocks aufbringt, in der Nut (6) ein Rohrnetz (4) anordnet, während die Bahn (7) Aussparungen bildet, die sich an die Form der Nut (6) anschmiegen, und man dann auf dieser Seite eine Frontplatte (1) mit Hilfe einer Zusammenschichtungszwischenschicht befestigt.

23. Verfahren nach Anspruch 22, **dadurch gekennzeichnet, daß** man die Nut (6) mit einer gewundenen Form bildet und für das Rohrnetz (4) einen Schlauch verwendet, den man durch seine Positionierung in der Nut (6) formt.

24. Verfahren nach Anspruch 22 oder 23, **dadurch gekennzeichnet, daß** man von einer anfangs ebenen wärmeleitenden Schicht (7) ausgeht, die ausreichend flexibel ist, um durch das Vorhandensein der Frontplatte (1), die das Rohrnetz (4) in der Nut (6) hält, die Aussparungen zu formen.
